Europäisches Patentamt

European Patent Office

Office européen des brevets

(11) Veröffentlichungsnummer: **0 262 521 B1**

# EUROPÄISCHE PATENTSCHRIFT

(45) Veröffentlichungstag der Patentschrift: 17.04.91

(51) Int. Cl.⁵: **H02P 9/30**

(21) Anmeldenummer: 87113625.5

(22) Anmeldetag: 17.09.87

(54) **Anordnung zum Einstellen der elektrischen Spannung an der rotierenden Erregerwicklung eines elektrischen Generators.**

(30) Priorität: 30.09.86 DE 3633274

(43) Veröffentlichungstag der Anmeldung:
06.04.88 Patentblatt 88/14

(45) Bekanntmachung des Hinweises auf die
Patenterteilung:
17.04.91 Patentblatt 91/16

(84) Benannte Vertragsstaaten:
AT BE CH DE FR LI NL

(56) Entgegenhaltungen:
DE-A- 2 212 270
GB-A- 2 010 603

(73) Patentinhaber: **Siemens Aktiengesellschaft**
**Wittelsbacherplatz 2**
**W-8000 München 2(DE)**

(72) Erfinder: **Hofmann, Hermann**
**Almoshofer-Hauptstrasse 69**
**W-8500 Nürnberg(DE)**
Erfinder: **Frankenberg, Wolfgang, Dipl.-Ing.**
**Anderlohstrasse 25**
**W-8520 Erlangen(DE)**
Erfinder: **Russ, Georg**
**Gebbertstrasse 78**
**W-8520 Erlangen(DE)**
Erfinder: **Fick, Horst, Dr.**
**Ludwigstrasse 28**
**W-8510 Fürth 60(DE)**

## Beschreibung

Die Erfindung betrifft eine Anordnung zum Einstellen der elektrischen Spannung an der rotierenden Erregerwicklung eines elektrischen Generators mit einem Außenpolgenerator als Haupterregermaschine, mit von Thyristoren gebildeten mitlaufenden Drehstromgleichrichterbrücken und mit einer hiermit über eine induktive Übertragungseinrichtung gekoppelten Regelungseinrichtung, die im Normalbetrieb eine Wechselspannung $U_E$ am Ausgang der Haupterregermaschine konstant hält und eine Gleichspannung $U_{DG}$ an der Erregerwicklung zur Konstanthaltung der Generatorausgangsspannung durch Verändern eines den Zündzeitpunkt der Thyristoren bestimmenden Steuerwinkels $\alpha$ einstellt, wobei $\alpha$ bei sinusförmigem Verlauf der anliegenden Wechselspannung $U_E$ dem Winkel zwischen dem frühest möglichen und dem tatsächlichen Zündzeitpunkt entspricht.

Seit einiger Zeit sind mit großem Erfolg Turbogeneratoren mit einem Erregersystem mit rotierender Gleichrichtererregung im Einsatz. Der Fortfall von Schleifringen und damit der Fortfall der Notwendigkeit diese in bestimmten Intervallen überdrehen zu müssen und der Fortfall der Bürstenprobleme, die immer wieder zu mehr oder weniger großen Störungen führten, haben diese Entwicklung begünstigt.

Das Regelverhalten der unter Verwendung von Dioden aufgebauten rotierenden Gleichrichtererregung wird durch eine stationäre über Thyristoren geregelte Erregung noch weiter verbessert. Der hierfür erforderliche Aufwand ist jedoch verhältnismäßig groß, wobei insbesondere der erforderliche Platzbedarf als nachteilig empfunden wird. Der gesteigerte Platzbedarf ergibt sich vor allem aus einer hierbei erforderlichen leistungsstärkeren Hilferregermaschine und einem außerdem erforderlichen Zusatzlager, so daß sich eine erhebliche Verlängerung des Turbogeneratorsatzes ergibt.

Zweifellos sind jedoch auch Anwendungsfälle vorhanden, in denen einerseits ein besseres Regelverhalten bei Störungen im Netz erreicht werden soll, und andererseits ein größerer Platzbedarf für den Turbogenerator in Kauf genommen werden kann. Das bessere Regelverhalten bei Störungen bezieht sich dabei sowohl auf die Spannungshaltung als auch auf das Abfangen und das Stabilisieren von Polradpendelungen. In neuerer Zeit sind daher, wie beispielsweise die DE-PS 23 59 578 zeigt, Anordnungen mit rotierenden Thyristoren geschaffen worden. Die über rotierende Thyristoren geregelte Erregung verbindet die Vorteile der schleifringlosen Übertragung der Erregerleistung mit den Vorteilen einer statischen Thyristor-Erregung.

Diese Vorteile bestehen insbesondere in einem sehr guten Regelverhalten und in einer Schnellentregung durch die Möglichkeit der Erregerspannungs-Umkehr.

Hierzu werden Generatorspannung und Generatorstrom gemessen, als Regelgrößen dem Spannungsregler zugeführt und dort mit dem Sollwert verglichen. Das Ausgangssignal des Reglers wird als Stellgröße induktiv dem auf der Welle untergebrachten Gittersteuersatz und somit dem Thyristorstromrichter zugeführt. Die Feldspannung des Generators wird durch die Thyristorsteuerung direkt beeinflußt. Die Erregerleistung wird in einer Haupterregermaschine erzeugt, wobei im Anker stets die volle Deckenspannung ansteht. Im Falle der Stoßerregung werden die Thyristoren voll ausgesteuert und damit die Deckenspannung voll zur Erzielung des Stoßerregerstromes genutzt. Zur Erzielung einer Gegenspannung im Falle der Entregung werden die Thyristoren mit so großer Phasenverschiebung gegenüber dem frühest möglichen Zündzeitpunkt angesteuert, daß eine negative Feldspannung ansteht.

Bei der bekannten Anordnung ist die Haupterregermaschine ein Drei-Phasen-Außenpol-Drehstromgenerator der entsprechend seinen sechs Polen mit 150 Hz bzw. 180 Hz arbeitet. Die Hilfserregermaschine ist dagegen eine Innenpolmaschine mit einem 16- bzw. 14-poligen Polrad, das mit Permanentpolen besetzt ist. In der Ständerwicklung wird Drehstrom von 400 Hz bzw. 420 Hz erzeugt und über einen Thyristor-Spannungsregler als Gleichstrom der Feldwicklung der Haupterregermaschine zugeführt.

Die Thyristoren sind in einem Thyristorrad in Brückenschaltung angeordnet, wobei mehrere Thyristoren parallel arbeiten. Zu jedem parallelen Brückenzweig gehört dabei ein eigener Zweig der Ankerwicklung, um eine gleichmäßige Stromaufteilung unter den parallelen Thyristoren zu erzwingen. Jedem Thyristor ist ein eigener Beschaltungs- und Ansteuerungsbaustein zugeordnet, der die RC-Beschaltung und die Ansteuerungselektronik aus einem Zündverstärker und einem Zündübertrager umfaßt. Dieser Baustein ist im Thyristorrad räumlich neben dem Leistungsthyristor untergebracht.

Eine außerdem erforderliche Meß-, Steuer- und Versorgungselektronik ist in Elektronik-Büchsen enthalten und in einem eigenen Elektronikrad neben dem Thyristorrad untergebracht.

Zur Übertragung der Meß- und Steuergrößen auf den rotierenden Läufer und zur Übertragung der Meß- und Steuergrößen vom Läufer auf die ruhenden Anlageteile dient eine induktive Signalübertragung. Diese induktive Signalübertragung ist für eine Übertragungsrichtung auf der Welle und für die andere Übertragungsrichtung auf dem Elektronikrad angeordnet. Zur Übertragung sind dabei mehrere Spulen vorgesehen, die über den Umfang systematisch so verteilt sind, daß in jeder Lage des Läufers eine gleichbleibende und ungestörte Signalübertragung möglich ist. Diese erfolgt teils kontinuierlich teils multiplex mittels einer Spannungs- Frequenz- Umsetzung in einem Frequenzbereich von 10 bis 100 kHz.

Zur Energieversorgung der Meß-, Steuer- und Versorgungselektronik ist ein besonderer Steuerstromgenerator am Wellenende angeordnet.

Der Turbogeneratorsatz wird unter anderem auch beim Auftreten entsprechender Fehler in der Meß-, Steuer- und Versorgungselektronik oder in der induktiven Übertragungseinrichtung stillgesetzt.

Um eine vorgebene Begrenzung der Triggerimpulsdauer zu berücksichtigen wird gemäß GB-A-2010603 vorgeschlagen, bei einem bürstenlosen Erregersystem für dynamoelektrische Maschinen die Gates und Kathoden einer rotierenden Thyristoranordnung im wesentlichen kurzzuschließen, wenn ein Triggern der Thyristoren durch den Steuersatz nicht erforderlich ist.

Der Erfindung liegt nun die Aufgabe zugrunde, die bekannte mit mitlaufenden Thyristoren im Erregerstromkreis zur Regelung der Ausgangsspannung des Generators versehene Anordnung in ihrer Zeitverfügbarkeit zu verbessern und Wartungsarbeiten sowie Kleinreperaturen, insbesondere an der Meß-, Steuer- und Versorgungselektronik in ohnedies dafür vorgesehene Zeitintervalle zu verschieben.

Diese Aufgabe wird bei einer Anordnung der eingangs genannten Art erfindungsgemäß dadurch gelöst, daß in einer ruhenden, mit den rotierenden Baugruppen über die induktive Übertragungseinrichtung und mit der Regelungseinrichtung direkt gekoppelten Kontrolleinrichtung ständig der gemessene Wert der Gleichspannung $U_{DG}$ mit dem rechnerischen Produkt aus der Wechselspannung $U_E$ und cos $\alpha$ verglichen wird, daß die Thyristoren der Drehstromgleichrichterbrücken infolge ihrer Beschaltung beim Ausbleiben von Vorgabewerten für den Steuerwinkel $\alpha$ selbsttätig zum frühest möglichen Zeitpunkt gezündet werden, so daß die Thyristoren dann die Funktion von Dioden haben und daß bei einer unzulässigen Abweichung der Gleichspannung $U_{DG}$ von dem Produkt aus $U_E$ und cos $\alpha$ gleichzeitig

- eine Übertragungsleitung für Vorgabewerte für den Steuerwinkel $\alpha$ geöffnet und
- die bis dahin konstante Wechselspannung $U_E$ zur Erzeugung einer konstanten Ausgangsspannung des Generators variiert wird.

Gemäß einer vorteilhaften Ausgestaltung der erfindungsgemäßen Anordnung dient als Signal für den Steuerwinkel $\alpha$ ein Rechtecksignal mit variabler Frequenz, wobei eine hohe Frequenz, beispielsweise 70 kHz, einem kleinen Steuerwinkel $\alpha$ und eine niedrigere Frequenz, beispielsweise 15 kHz,

einem großen Steuerwinkel $\alpha$ entspricht.

Weitere Ausgestaltungsmerkmale der erfindungsgemäßen Anordnung bestehen da rin, daß beim Absinken dieser variablen Frequenz unter die dem größtzulässigen Steuerwinkel $\alpha$ entsprechende Frequenz von einem Steuersatz zunächst der größtzulässige Steuerwinkel $\alpha$ beibehalten wird und daß beim weiteren Absinken der variablen Frequenz, beispielsweise beim Erreichen oder Unterschreiten einer Frequenz von 3 kHz oder der Frequenz "Null", Zusatzimpulse aus einer Synchronisierspannung in Kanäle zur Bildung von Zündimpulsen zur Zündung der Thyristoren entsprechend einem sehr kleinen Steuerwinkel $\alpha$ eingeblendet werden, und daß beim Ausfall der dem Steuerwinkel $\alpha$ entsprechenden Signale die Thyristoren bei einem Steuerwinkel $\alpha$ kleiner oder gleich 10° gezündet werden.

Die erfindungsgemäß gestaltete Anordnung zum Einstellen der elektrischen Spannung an der rotierenden Erregerwicklung eines elektrischen Generators ist sehr vorteilhaft, weil sie einerseits im Normalbetrieb durch den Einsatz mitlaufender Thyristoren ein sehr gutes Regelverhalten und die Möglichkeit einer Schnellentregung durch Erreger-Spannungs-Umkehr bietet und andererseits bei Störungen im Meß-, Steuer- und/oder Versorgungselektronikteil durch eine selbsttätige Umschaltung auf Diodenbetrieb mit einer Regelung über die Erregung der Haupterregermaschine ein Stillsetzen des gesamten Turbogenerators vermeidet, so daß in vielen Fällen die Beseitigung von aufgetretenen Fehlern zu ohnedies zu Wartungszwecken vorgesehenen Stillstandszeiten durchgeführt werden kann.

Ein Ausführungsbeispiel der Erfindung wird anhand einer Zeichnung näher erläutert.

In der im wesentlichen ein Blockschaltbild darstellenden Zeichnung sind alle Baugruppen und Bauteile oberhalb einer gestrichelten Linie 1 an einer rotierenden Erregerwelle befestigt und dementsprechend alle unterhalb der gestrichelten Linie 1 dargestellten Bauteile und Baugruppen gehäusefest, ruhend gelagert.

Von rechts nach links sind nebeneinander
- eine Hilfserregermaschine mit einem rotierenden Polrad 2 und ruhenden Ständerwicklungen 3,
- ein Steuerstromgenerator mit ruhender Feldwicklung 4 und rotierenden, einen Steuerstrom liefernden Spulen 5,
- eine Haupterregermaschine ebenfalls mit ruhender Feldwicklung 6 und rotierenden, den Erregerstrom liefernden Spulen 7,
- ein Informationselektronikrad 8 mit einer induktiven Übertragungseinrichtung 9,
- ein Thyristorrad 10 und
- ein Generator mit einer Feldwicklung 11 und ruhenden, den erzeugten Strom abgebenden Spulen 12

angeordnet. Auf der ruhenden Seite sind an die Übertragungseinrichtung 9 eine Regelungseinrichtung 13, eine Kontrolleinrichtung 14 und eine Überwachungseinrichtung 15 angeschlossen. Das Informationselektronikrad 8 enthält eine Einrichtung 16 zur Temperaturerfassung, eine Einrichtung 17 zur Erfassung einer an den Spulen 7 anstehenden Wechselspannung $U_E$, eine Einrichtung 19 zur Erfassung der an der Feldwicklung 11 anliegenden Gleichspannung $U_{DG}$ sowie eine Einrichtung 18 zur Erfassung des hiervon getriebenen Stromes und außerdem einen Steuersatz 20 und eine Erdschlußerfassung 21. Die im Informationselektronikrad 8 zusammengefaßten Einrichtungen 16 bis 21 werden über eine Leitung 25 aus den Spulen 5 des Steuerstromgenerators mit der erforderlichen elektrischen Leistung versorgt.

Im Betrieb, d.h. bei rotierender Welle, liefern die Ständerwicklungen 3 der Hilfserregermaschine über eine dreiadrige Leitung 22 eine Versorgungsleistung an die Regelungseinrichtung 13, die Kontrolleinrichtung 14 und die Überwachungseinrichtung 15. Die Regelungseinrichtung 13 erhält über die Leitung 22 außerdem eine ausreichende Leistung zur Speisung der Erreger- oder Feldwicklungen 6 der Haupterregermaschine mit der erforderlichen Leistung. Die an die Feldwicklungen 6 abgegebene Spannung ist dabei von der Regelungseinrichtung 13 so geregelt, daß die an den rotierenden Spulen 7 anstehende Wechselspannung $U_E$ konstant ist. Die Haupterregermaschine hat sechs Drehstromsysteme aus je drei rotierenden Spulen 7. Die von diesen Spulen 7 erzeugte konstante Wechselspannung $U_E$ liegt über 6 × 3 Leiter 23 an sechs Drehstromgleichrichterbrücken im Thyristorrad 10.

Die Drehstromgleichrichterbrücken im Thyristorrad 10 sind von 36 Thyristoren 24 gebildet. Jeder der Thyristoren 24 ist mit einem RC-Glied 29 beschaltet und liegt in Reihe mit je einer Sicherung 30. Die Thyristoren 24 werden jeweils durch von dem Steuersatz 20 gesendete Zündimpulse mehr oder weniger stark verzögert gezündet. Die dadurch variable, von den Drehstromgleichrichterbrücken abgegebene Gleichspannung $U_{DG}$ ist über Gleichstromschienen 31 der Feldwicklung 11 des Generators zugeführt. Dabei ist die Höhe der Gleichspannung $U_{DG}$ so eingestellt, daß die von den Spulen 12 an das vom Generator zu versorgende Netz abgegebene Spannung konstant ist.

Diese Einstellung erfolgt über die Regelungseinheit 13, die die Spannung und den Strom an den Spulen 12 mißt und daraus die jeweils zur Konstanthaltung der Spannung an den Spulen 12 erforderliche Zündverzögerung für die Thyristoren 24 bestimmt, wobei als Zündverzögerung ein Steuerwinkel $\alpha$ ermittelt wird. Der Steuerwinkel ist, bezogen auf den sinusförmigen Verlauf der Wechselspannung $U_E$, der Winkel zwischen dem frühest möglichen und dem erforderlichen tatsächlichen Zündzeitpunkt. Ein der erforderlichen Zündverzögerung und damit dem Steuerwinkel $\alpha$ entsprechendes Signal wird als Rechtecksignal mit variabler Frequenz über die induktive Übertragungseinrichtung 9 an den Steuersatz 20 gegeben. Dabei entspricht eine hohe Frequenz, beispielsweise 70 kHz, einem kleinen Wert für den Steuerwinkel $\alpha$ und eine niedrige Frequenz, beispielsweise 15 kHz, einem großen Wert für den Steuerwinkel $\alpha$. Der Steuersatz 20 liegt auch an den die Wechselspannung $U_E$ führenden Leitern 23 und leitet den jeweils frühest möglichen Zündzeitpunkt, von dem ab der Steuerwinkel $\alpha$ zu messen ist, von der Wechselspannung $U_E$ ab. Entsprechend werden dann alle 36 Thyristoren 24 gezündet und über die so eingestellte Gleichspannung $U_{DG}$ an der Feldwicklung 11, die von den Spulen 12 abgegebene Spannung konstant gehalten.

Der Steuersatz 20 ist intern jedoch so aufgebaut, daß er beim Ausbleiben des dem Steuerwinkel $\alpha$ entsprechenden Signals über eine bestimmte Zeit, beispielsweise über 10 ms hinaus, ständig alle Thyristoren 24 zum frühest möglichen Zeitpunkt zündet.

Die Gleichspannung $U_{DG}$ wird gleichzeitig von der Einrichtung 19 erfaßt und von dieser über die induktive Übertragungseinrichtung 9 an die Kontrolleinrichtung 14 gemeldet. Dort wird die Größe der Gleichspannung $U_{DG}$ ständig mit dem jeweiligen Momentanwert des rechnerischen Produktes aus der Wechselspannung $U_E$ und cos $\alpha$ verglichen. Die jeweiligen Momentanwerte für $U_E$ und $\alpha$ erhält die Kontrolleinrichtung 14 über Anschlüsse 26 aus der Regelungseinrichtung 13. Die Ermittlung des jeweiligen Wertes von cos $\alpha$ aus dem Steuerwinkel $\alpha$ erfolgt innerhalb der Kontrolleinrichtung 14.

Bei einer über ein zulässiges Maß hinausgehenden Abweichung des rechnerischen Produktes aus $U_E$ und cos $\alpha$ vom Wert der Gleichspannung $U_{DG}$ wird über die Regelungseinrichtung 13 gleichzeitig eine Übertragungsleitung 27 für die dem Steuerwinkel $\alpha$ entsprechenden Signale durch Betätigen eines Relais 28 geöffnet und die von den rotierenden Spulen 7 der Haupterregermaschine abgegebene Wechselspannung $U_E$ so geregelt, daß die Spannung an den Spulen 12 konstant ist. Dabei arbeiten die Thyristoren 24 als Dioden, da sie infolge des Ausbleibens eines dem Steuerwinkel $\alpha$ entsprechenden Signals vom Steuersatz 20 ständig zum frühest möglichen Zeitpunkt gezündet werden.

Diese Umschaltung verhindert in vielen Fällen ein Stillsetzen des Generators beim Auftreten von Fehlern innerhalb des Informationselektronikrades 8, der induktiven Übertragungseinrichtung 9 sowie der Einrichtungen 13 bis 15. Dadurch sind auftretende Ausfallzeiten weiter verkürzt, so daß die Zeitverfügbarkeit von mit einer erfindungsgemäß gestalteten Anordnung ausgerüsteten Generatoren gegenüber bekannten Einrichtungen weiter erhöht ist. Um jedoch zum nächstmöglichen Zeitpunkt eine Instandsetzung der fehlerhaften Teile einleiten zu können, wird jede Umschaltung von Thyristorregelung auf Diodenregelung über eine Leitung 32 unverzüglich an eine Warte gemeldet.

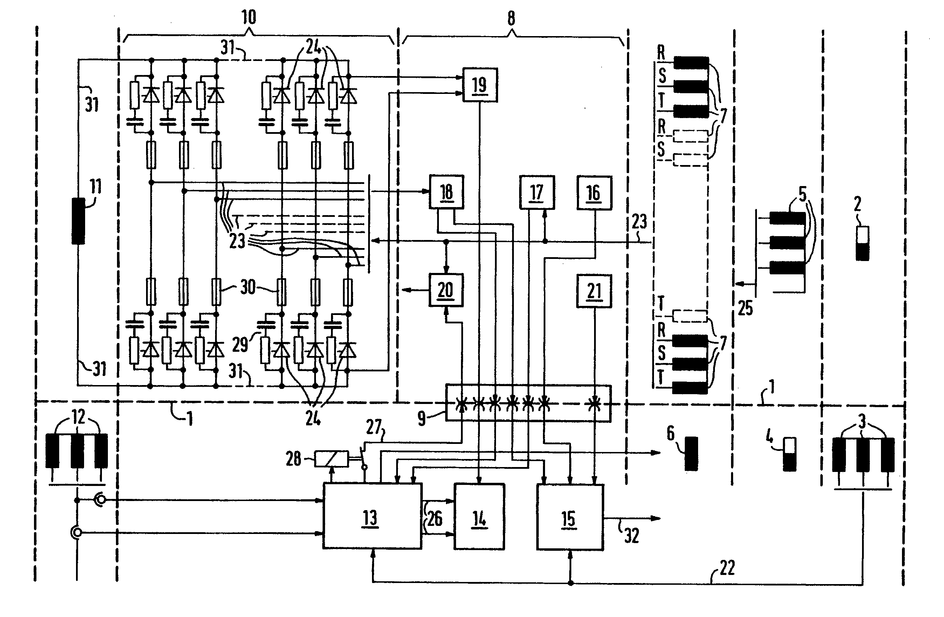

**Ansprüche**

1. Anordnung zum Einstellen der elektrischen Spannung an der rotierenden Erregerwicklung (11) eines elektrischen Generators mit einem Außenpolgenerator als Haupterregermaschine, mit von Thyristoren (24) gebildeten mitlaufenden Drehstromgleichrichterbrücken und mit einer hiermit über eine induktive Übertragungseinrichtung (9) gekoppelten Regelungseinrichtung (13), die im Normalbetrieb
   - eine Wechselspannung $U_E$ am Ausgang der Haupterregermaschine konstant hält und
   - eine Gleichspannung $U_{DG}$ an der Erregerwicklung zur Konstanthaltung der Generatorausgangsspannung durch Verändern eines den Zündzeitpunkt der Thyristoren (24) bestimmenden Steuerwinkels $\alpha$ einstellt, wobei $\alpha$ bei sinusförmigem Verlauf der anliegenden Wechselspannung $U_E$ dem .Winkel zwischen dem frühest möglichen und dem tatsächlichen Zündzeitpunkt entspricht, **dadurch gekennzeichnet,**
   - daß in einer ebenfalls ruhenden, mit den rotierenden Baugruppen über die induktive Übertragungseinrichtung (9) und mit der Regelungseinrichtung (13) direkt gekoppelten Kontrolleinrichtung (14) ständig der gemessene Wert der Gleichspannung $U_{DG}$ mit dem rechnerischen Produkt aus der Wechselspannung $U_E$ und $\cos \alpha$ verglichen wird,
   - daß die Thyristoren (24) der Drehstromgleichrichterbrücken über einen Steuersatz (20) beim Ausbleiben von dem Steuerwinkel $\alpha$ entsprechenden Signalen selbsttätig zum frühest möglichen Zeitpunkt gezündet werden, so daß die Thyristoren (24) dann die Funktion von Dioden haben, und
   - daß bei einer unzulässigen Abweichung der Gleichspannung $U_{DG}$ von dem Produkt aus $U_E$ und $\cos \alpha$ gleichzeitig

   - eine Übertragungsleitung (27) für die dem Steuerwinkel $\alpha$ entsprechenden Signale geöffnet und
   - die bis dahin konstante Wechselspannung $U_E$ zur Erzeugung einer konstanten Ausgangsspannung des Generators variiert wird.

2. Anordnung nach Anspruch 1, **dadurch gekennzeichnet,** daß als Signal für den Steuerwinkel $\alpha$ ein Rechtecksignal mit variabler Frequenz dient, wobei eine hohe Frequenz, beispielsweise 70 kHz, einem kleinen Steuerwinkel und eine niedrigere Frequenz, beispielsweise 15 kHz, einem großen Steuerwinkel $\alpha$ entspricht.

3. Anordnung nach Anspruch 1 oder 2, **dadurch gekennzeichnet,** daß beim Absinken dieser variablen Frequenz unter die dem größtzulässigen Steuerwinkel $\alpha$ entsprechende Frequenz von einem Steuersatz (20) zunächst der größtzulässige Steuerwinkel $\alpha$ beibehalten wird und daß beim weiteren Absinken der variablen Frequenz, beispielsweise beim Erreichen oder Unterschreiten einer Frequenz von 3 kHz oder der Frequenz "Null", Zusatzimpulse aus einer Synchronisierspannung in Kanäle zur Bildung von Zündimpulsen zur Zündung der Thyristoren (24) entsprechend einem sehr kleinen Steuerwinkel $\alpha$ eingeblendet werden.

4. Anordnung nach einem der Ansprüche 1 bis 3, **dadurch gekennzeichnet,** daß beim Ausfall der dem Steuerwinkel $\alpha$ entsprechenden Signale die Thyristoren (24) bei einem Steuerwinkel $\alpha$ kleiner oder gleich $10°$ gezündet werden.

**Claims**

1. Arrangement for adjusting the electric voltage at the rotating exciter winding (11) of an electric generator having an external pole generator as a main exciter, having revolving three-phase current rectifier bridges which are formed by thyristors (24) and having a regulating device (13) which is coupled herewith by way of an inductive transmission device (9) and which during normal operation keeps an alternating voltage $U_E$ constant at the output of the main exciter and adjusts a direct voltage $U_{DG}$ at the exciter winding for the purpose of keeping the generator output voltage constant by varying a control angle $\alpha$ determining the firing point of the thyristors (24), where $\alpha$, with sinusoidal shape of the applied alternating voltage $U_E$ , corresponds to the angle between the earliest possible firing point and the actual firing point, **characterised in that** in a likewise stationary control device (14), which is coupled with the rotating modules by way of the inductive transmission device (9) and with the regulating device (13) directly, the measured value of the direct voltage $U_{DG}$ is constantly compared with the calculated product of the alternating voltage $U_E$ and cos $\propto$, in that the thyristors (24) of the three-phase current rectifier bridges are fired by way of a control set (20) in the case of failure of signals, corresponding to the control angle $\propto$, automatically at the earliest possible point of time so that the thyristors (24) then have the function of diodes and in that in the case of impermissible deviation of the direct voltage $U_{DG}$ from the product of $U_E$ and cos $\propto$, at the same time a transmission line (27) is opened for the signals corresponding to the control angle $\propto$ and the alternating voltage $U_E$ which was constant until then is varied for the purpose of generating a constant output voltage of the generator.

2. Arrangement according to claim 1, characterized in that a rectangular signal with variable frequency is used as a signal for the control angle $\propto$, in which case a high frequency, for example 70 kHz, corresponds to a small control angle $\propto$ and a lower frequency, for example 15 kHz, corresponds to a large control angle $\propto$.

3. Arrangement according to claim 1 or 2, characterised in that if this variable frequency drops below the frequency, corresponding to the maximum permissible control angle $\propto$ , in the first instance the maximum permissible control angle $\propto$ is maintained by a control set (20) and in that with further drop of the variable frequency, for example with arrival at or fall below a frequency of 3 kHz or the frequency "zero", additional pulses from a synchronizing voltage are faded into channels for the purpose of forming firing pulses for the firing of the thyristors (24) in accordance with a very small control angle $\propto$ .

4. Arrangement according to one of the claims 1 to 3, characterized in that in the case of failure of the signals corresponding to the control angle $\propto$ the thyristors (24) are fired in the case of a control angle $\propto$ smaller than or equal to $10^\circ$ .

**Revendications**

1. Dispositif pour régler la tension électrique dans l'enroulement d'excitation tournant (11) d'un générateur électrique comportant un générateur à pôles saillants en tant que machine d'excitation principale, des ponts redresseurs triphasés tournants, formés par des thyristors (24), et un dispositif de régulation (13), qui est accouplé à ces ponts par l'intermédiaire d'un dispositif inductif de transmission (9) et qui, pendant le fonctionnement normal,

- maintient constante une tension alternative $U_E$ à la sortie de la machine d'excitation principale, et
- règle une tension continue $U_{DG}$ dans l'enroulement d'excitation de manière à maintenir constante la tension de sortie du générateur par modification d'un angle de commande $\alpha$ déterminant l'instant d'amorçage du thyristor (24), $\alpha$ correspondant, dans le cas d'une variation sinusoïdale de la tension alternative appliquée $U_E$, à l'angle entre l'instant d'amorçage le plus précoce possible et l'instant d'amorçage effectif, caractérisé par le fait
- qu'en permanence la valeur mesurée de la tension continue $U_{DG}$ est comparée au produit, formé par calcul, de la tension alternative $U_E$ par cos $\alpha$, dans un dispositif de contrôle (14) également statique, accouplé directement aux modules tournants par l'intermédiaire du dispositif inductif de transmission (9) et au dispositif de régulation (13),
- que les thyristors (24) des ponts redresseurs triphasés sont amorcés automatiquement à l'instant le plus précoce possible par l'internédiaire d'une unité de commande (20) dans le cas de l'absence de signaux correspondant à l'angle de commande $\alpha$, de sorte que les thyristors (24) assument alors la fonction de diodes, et
- que dans le cas d'un écart inadmissible entre la tension continue $U_{DG}$ et le produit de $U_E$ par cos $\alpha$, simultanément
  - une ligne de transmission (27) est ouverte pour les signaux correspondant à l'angle de commande $\alpha$, et
  - la tension alternative $U_E$ jusqu'alors constante est modifiée pour la production d'une tension de sortie constante du générateur.

2. Dispositif suivant la revendication 1, caractérisé par le fait qu'on utilise comme signal pour l'angle de commande $\alpha$, un signal rectangulai-

re possédant une fréquence variable, une fréquence élevée, par exemple 70 kHz, correspondant à un petit angle de commande $\alpha$ tandis qu'une fréquence plus faible, par exemple 15 kHz, correspond à un grand angle de commande $\alpha$.

3. Dispositif suivant la revendication 1 ou 2, caractérisé par le fait que dans le cas où cette fréquence variable tombe au-dessous de la fréquence correspondant à l'angle de commande maximum possible $\alpha$, tout d'abord l'angle de commande maximum possible $\alpha$ est maintenu par une unité de commande (20) et que, lorsque la fréquence variable continue à diminuer et par exemple lorsqu'elle atteint ou tombe audessous d'une fréquence de 3 kHz ou de la fréquence "zéro", des impulsions supplémentaires obtenues à partir d'une tension de synchronisation sont injectées dans des canaux pour la formation d'impulsions d'amorçage servant à amorcer les thyristors (24), conformément à un très petit angle de commande $\alpha$.

4. Dispositif suivant l'une des revendications 1 à 3, caractérisé par le fait que dans le cas de l'absence des signaux correspondant à l'angle de commande $\alpha$, les thyristors (24) sont amorcés pour un angle de commande $\alpha$ inférieur ou égal à 10°.